# EUROPÄISCHE PATENTSCHRIFT

(11) **EP 3 649 434 B1**
(45) Veröffentlichungstag und Bekanntmachung des Hinweises auf die Patenterteilung: **18.08.2021**
(21) Anmeldenummer: 18734156.5
(22) Anmeldetag: 19.06.2018
(51) Int. Cl.: G01C 21/36

(54) **VERFAHREN UND VORRICHTUNG ZUM ANZEIGEN VON SPURINFORMATIONEN IN EINEM FAHRZEUG**
METHOD AND DEVICE FOR DISPLAYING LANE INFORMATION IN A VEHICLE
PROCÉDÉ ET DISPOSITIF POUR AFFICHER DES INFORMATIONS CONCERNANT DES VOIES DE CIRCULATION DANS UN VÉHICULE

(30) Priorität: 07.07.2017 DE 102017211600
(43) Veröffentlichungstag der Anmeldung: 13.05.2020
(73) Patentinhaber: Volkswagen Aktiengesellschaft, 38440 Wolfsburg (DE)
(72) Erfinder: PÖGEL, Tobias, 38179 Schwülper (DE)
(86) Internationale Anmeldenummer: PCT/EP2018/066277
(87) Internationale Veröffentlichungsnummer: WO 2019/007680

(56) Entgegenhaltungen:
- EP-A2- 2 078 927
- JP-A- 2015 155 857
- US-B1- 6 269 304
- US-B2- 6 446 000
- US-B2- 7 127 350

## Beschreibung

Verfahren und Vorrichtung zum Anzeigen von Spurinformationen in einem Fahrzeug Die vorliegende Erfindung betrifft ein Verfahren zum Anzeigen von Spurinformationen in einem Fahrzeug. Weiterhin betrifft die Erfindung eine Vorrichtung zum Anzeigen von Spurinformationen in einem Fahrzeug.

In aktuellen Navigationssystemen werden in einer Vorausschau Spurinformationen angezeigt, die sich auf die Spursituation beziehen, wie sie bei dem nächsten auszuführenden Manöver auftritt. Problematisch hierbei ist, dass es zwischen der aktuellen Fahrzeugposition und dem nächsten Manöverpunkt zu einer mehrfachen Veränderung der Spurführung kommen kann.

Eine Darstellung bezogen auf den nächsten Manöverpunkt ist daher nicht auf die Momentansituation übertragbar. Da aufgrund der Distanz zwischen aktueller Fahrzeugposition und dem nächsten Manöverpunkt, die Situation bei dem nächsten Manöverpunkt häufig noch nicht einsehbar ist, kommt es häufig zu Fehlinterpretationen der gezeigten Situation.

Die DE 10 2007 027 297 A1 beschreibt eine Anzeige von Verkehrs- und

Infrastrukturinformationen in einem Fahrzeug. Hierbei sollen dem Fahrer vorausschauende Informationen und Handlungsempfehlungen bereitgestellt werden, die über das unmittelbare Umfeld des Fahrzeugs hinausgehen und die aktuelle Verkehrssituation darstellen. Es wird eine Fahrstreckenvorausschau angezeigt. Dabei werden Fahrempfehlungen ausgegeben.

Die DE 10 2011 006 347 A1 beschreibt ein Verfahren zur Ausgabe von grafischen Fahrhinweisen. Die Fahrhinweise werden dabei in kontaktanaloger Weise mittels eines Head-Up-Displays in das Sichtfeld des Fahrers projiziert. Die Fahrhinweise können dabei den Fahrer zu einer Soll-Fahrspur leiten.

Die DE 10 2004 036 825 A1 beschreibt ein vorausschauendes Fahrerassistenzsystem, welches unter Verwendung digitaler Straßenkarten vorausschauend auf die vordem Fahrzeug liegende Strecke Hinweise an den Fahrer ausgibt. Dabei erkennt das System, Situationen, in denen es mehrere alternative Fahrtrouten für das Fahrzeug gibt. Es wird dann eine Vorausschau auf die Strecke angezeigt, welche der Fahrer mit größter Wahrscheinlichkeit wählt.

Die US 6 446 000 B2 beschreibt ein Navigationssystem, bei dem anhand einer Route mit Kreuzungen eine empfohlene Reiseroute ermittelt wird, auf der das Fahrzeug mit möglichst wenigen Spurwechseln fahren kann. Die Anordnung der Spuren bei der nächsten und den darauf folgenden Kreuzungen sowie die jeweils empfohlenen Spuren werden grafisch ausgegeben.

Die US 6269 304 B1 beschreibt ein Navigationssystem, bei dem bestimmt wird, ob das Fahrzeug eine Kreuzung passiert, bevor es an einer weiteren Kreuzung abbiegen soll. Es werden Spurinformationen für die früheren Kreuzungen und die spätere Kreuzung ausgegeben, wobei die in die gewünschte Richtung befahrbaren Spuren markiert sind.

Die US 7 127 350 B2 beschreibt eine Navigationsvorrichtung, bei der die Position eines Fahrzeugs erfasst wird. Es werden Anzeigen mit Spurinformationen über eine bestimmte Zahl von Kreuzungen eingeblendet, die auf der Route innerhalb eines bestimmten Abstands vor dem Fahrzeug liegen.

Die EP 2078927 A2 beschreibt ein Verfahren zum Betrieb eines Navigationssystems, bei welchem eine Fahrspuranweisung, die Anweisungen für den Benutzer enthält, um ausgehend von der aktuellen Position der berechneten Route durch ein Fahrspurwechselmanöver zu folgen, berechnet und eine Fahrspurschemaansicht, die die Fahrspuranweisung schematisiert graphisch darstellt, angezeigt wird. Hierbei wird ein erster Fahrbahnverlauf, der die Fahrbahnen vor dem Fahrspurwechselmanöver darstellt, und ein zweiter Fahrbahnverlauf, der die Fahrbahnen während des Fahrspurwechselmanövers darstellt, berechnet und in der Fahrspurschemaansicht eine Kombination des ersten und zweiten Fahrbahnverlaufs angezeigt.

Der vorliegenden Erfindung liegt die Aufgabe zugrunde, ein Verfahren und eine Vorrichtung bereitzustellen, mittels welchen eine intuitive und schnell erfassbare Navigationsanzeige für einen Fahrer erzeugbar ist.

Erfindungsgemäß wird diese Aufgabe durch ein Verfahren mit den Merkmalen des Anspruchs 1 und eine Vorrichtung mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren wird die momentane Position des Fahrzeugs auf einer Route erfasst. Es wird eine Anzahl vorhandener Fahrspuren bei der momentanen Position in Fahrtrichtung des Fahrzeugs auf der Route ermittelt. Weiterhin wird der in Fahrtrichtung des Fahrzeugs vor dem Fahrzeug liegende Spurverlauf der vorhandenen Fahrspuren ermittelt, wobei aus dem Spurverlauf eine erste Fahrspur ermittelt wird, welche eine Soll-Fahrspur für das Fahrzeug ist. Zudem wird in einem ersten Anzeigebereich eine erste Anzeige erzeugt, welche ein schematisches Abbild der vorhandenen Fahrspuren bei der momentanen Position des Fahrzeugs darstellt, welches schematische Fahrspuren umfasst, wobei die Anzahl der schematischen Fahrspuren der Anzahl der vorhandenen Fahrspuren entspricht, so dass jeweils eine schematische Fahrspur einer vorhandenen Fahrspur zugeordnet ist. Weiterhin wird bei zumindest einer ersten schematischen Fahrspur ein graphisches Objekt erzeugt, welches anzeigt, ob es sich bei der der ersten schematischen Fahrspur zugeordneten Fahrspur um die Soll-Fahrspur handelt. Es wird eine erste Änderungsposition auf der Route ermittelt, ab welcher eine zweite und nicht mehr die erste Fahrspur die Soll-Fahrspur für das Fahrzeug ist. Es wird dann in einem zweiten Anzeigebereich eine zweite Anzeige erzeugt, welche ein schematisches Abbild der vorhandenen Fahrspuren bei der ersten Änderungsposition auf der Route darstellt. Erfindungsgemäß handelt es sich bei der Soll-Fahrspur für das Fahrzeug um die Fahrspur, welcher das Fahrzeug folgen sollte, um auf der Route zu verbleiben. Dies bedeutet, dass insbesondere solche Fahrspuren Soll-Fahrspuren sind, die in einer Ausfahrt münden, bei welcher abzufahren ist, um auf der Route zu bleiben. Insbesondere sind Fahrspuren keine Soll-Fahrspuren, wenn sie zu Bus-oder Taxi-Spuren werden oder auf der Route anderweitig wegfallen. Weiterhin handelt es sich bei einer Änderungsposition insbesondere um eine Position, bei welcher sich die Anzahl der Fahrspuren verändert. Dies kann beispielsweise der Fall sein, wenn eine Fahrspur für eine Ausfahrt zu den übrigen Fahrspuren bei der Änderungsposition hinzukommt. Soll der Fahrer die Ausfahrt nehmen, um auf der Route zu verbleiben, ändert sich daher die Soll-Fahrspur. In einem solchen Fall ist die erste Änderungsposition ein Manöverpunkt, bei welchem ein Nicht-Folgen ein Verlassen der Route zur Folge hat. Die Soll-Fahrspur kann sich jedoch auch dann ändern, wenn eine Fahrspur für die Benutzung für das Fahrzeug wegfällt. Dabei kann die Fahrspur dadurch wegfallen, dass sie endet, in eine Bus- oder Taxispur übergeht oder in eine Ausfahrt übergeht, welcher das Fahrzeug jedoch nicht folgen soll. Das erfindungsgemäße Verfahren ist daher insbesondere auch für Situationen geeignet, die sich nicht nur auf den Manöverpunkt einer Route, sondern auch auf allgemeine Spurveränderungen bezieht.

Dem Fahrer werden durch das erfindungsgemäße Verfahren vorteilhafterweise sowohl die momentan auf der Route vorhandenen Fahrspuren im ersten Anzeigebereich als auch die zukünftig auf der Route vorhandenen Fahrspuren im zweiten Anzeigebereich angezeigt. Der Fahrer wird daher von plötzlichen auftretenden Spurveränderungen nicht überrascht. Weiterhin können in der zweiten Anzeige zusätzliche Information angezeigt werden, wie die Distanz, die für einen Spurwechsel zur Verfügung steht. Zudem kann angezeigt werden, um welche Art von Spurveränderung es sich handelt. Wird die Soll-Fahrspur zu einer Ausfahrt, kann dies beispielsweise ausgegeben werden.

Ein schematisches Abbild der vorhandenen Fahrspuren zeigt insbesondere die Anzahl der Fahrspuren nebeneinander an. Jeder dieser schematischen Fahrspuren kann dabei eine tatsächlich vorhandene Fahrspur zugeordnet werden. Dadurch wird dem Fahrer ein Abbild der vorliegenden Fahrspurensituation bei seiner momentanen Position auf der Route schematisch angezeigt. Dadurch wird es erleichtert, Informationen zu Fahrspuren anzuzeigen. Insbesondere können fahrspurgenaue Informationen direkt bei den schematischen Fahrspuren angezeigt werden, auf welche sich die Informationen beziehen.

Insbesondere ist die erste Fahrspur der ersten schematischen Fahrspur zugeordnet, so dass das graphische Objekt anzeigt, dass es sich bei der ersten Fahrspur um die Soll-Fahrspur handelt. Hierdurch wird dem Fahrer vorteilhafterweise angezeigt, welche Fahrspur die Soll-Fahrspur ist. Die Entscheidung für einen Spurwechsel wird für den Fahrer dadurch erleichtert.

Weiterhin kann bei den schematischen Fahrspuren, die den vorhandenen Fahrspuren zugeordnet sind, die nicht als Soll-Fahrspur ermittelt werden, jeweils ein weiteres graphisches Objekt erzeugt werden, welches anzeigt, dass es sich nicht um die Soll-Fahrspur handelt. Es kann dann beispielsweise auf jeder schematischen Fahrspur ein weiteres graphisches Objekt erzeugt werden. Das graphische Objekt für die Soll-Fahrspur und die weiteren graphischen Objekte für die Nicht-Soll-Fahrspuren können sich dabei zur Unterscheidung in einem Parameter unterscheiden. Dieser Parameter ist beispielsweise die Farbe. Insbesondere können die graphischen Objekte farbcodiert sein und so dem Fahrer anzeigen, ob eine Fahrspur eine Soll-Fahrspur darstellt oder nicht. Weiterhin können sich auch die weiteren graphischen Objekte untereinander unterscheiden. Beispielsweise kann durch eine Farbcodierung der weiteren graphischen Objekte zwischen "zum Verbleib auf der Route ungeeigneten Fahrspuren" und "zwar nicht die Soll-Fahrspur darstellende, aber trotzdem zum Verbleib auf der Route geeignete Fahrspuren" unterschieden werden. Als geeignete Fahrspuren können dabei Fahrspuren angesehen werden, von denen aus nur ein Spurwechsel notwendig ist, um auf die Soll-Fahrspur zu gelangen. Von ungeeigneten Fahrspuren aus sind dann mehr als zwei Spurwechsel notwendig, um auf die Soll-Fahrspur zu gelangen.

Erfindungsgemäß wird ferner eine zweite Änderungsposition auf der Route ermittelt. Wenn die momentane Position des Fahrzeugs mit der ersten Änderungsposition übereinstimmt, wird ein Anzeigewechsel herbeigeführt, bei dem die zweite Anzeige in dem ersten Anzeigebereich angezeigt wird und bei dem in dem zweiten Anzeigebereich eine dritte Anzeige erzeugt wird, welche ein schematisches Abbild der vorhandenen Fahrspuren bei der zweiten Änderungsposition auf der Route darstellt. Die Anzeige wird daher bei Erreichen der ersten Änderungsposition aktualisiert. Die vorherige zukünftige Fahrspurensituation wird dann als Momentansituation angezeigt, während die Fahrspurensituation bei der zweiten Änderungsposition als zukünftige Situation angezeigt wird. Dadurch wird dem Fahrer vorteilhafterweise immer eine momentane Situation und eine zukünftige Situation angezeigt. Der Anzeigewechsel wird dabei insbesondere mittels einer Animation herbeigeführt. Bei der Animation wird beispielsweise die zweite Anzeige in den ersten Anzeigebereich überführt, wobei die erste Anzeige in dem ersten Anzeigebereich durch die zweite Anzeige ersetzt wird und die dritte Anzeige in dem zweiten Anzeigebereich angezeigt wird. Dadurch wird dem Fahrer besonders einfach und intuitiv visualisiert, dass er die erste Änderungsposition erreicht hat.

In einer anderen Ausgestaltung wird eine Ist-Fahrspur des Fahrzeugs erfasst, auf welcher sich das Fahrzeug befindet. Es wird in der ersten Anzeige bei der schematischen Fahrspur, welche der Ist-Fahrspur des Fahrzeugs zugeordnet ist, ein graphisches Positionsanzeigeobjekt erzeugt, welches das Fahrzeug repräsentiert. Es reicht dann ein visuelles Vergleichen des Positionsanzeigeobjekts mit den graphischen Objekten aus, um festzustellen, ob sich das Fahrzeugs auf der Soll-Fahrspur befindet.

In einer weiteren Ausgestaltung kann ermittelt werden ob die Ist-Fahrspur des Fahrzeugs der Soll-Fahrspur entspricht. Wenn ermittelt worden ist, dass die Ist-Fahrspur der Soll-Fahrspur entspricht, nimmt das graphische Positionsanzeigeobjekt ein erstes Erscheinungsbild an. Wenn hingegen ermittelt worden ist, dass die Ist-Fahrspur nicht der Soll-Fahrspur entspricht, nimmt das graphische Positionsanzeigeobjekt ein zweites Erscheinungsbild an. Dabei können sich die Erscheinungsbilder des graphischen Positionsanzeigeobjekts wiederum in ihrer Farbe unterscheiden. Beispielweise wird das graphische Positionsanzeigeobjekt ganz oder teilweise grün angezeigt, wenn die Ist-Fahrspur der Soll-Fahrspur entspricht. Das graphische Positionsanzeigeobjekt wird dann ganz oder teilweise rot angezeigt, wenn die Ist-Fahrspur nicht der Soll-Fahrspur entspricht. Alternativ kann das graphische Positionsanzeigeobjekt im zweiten Erscheinungsbild ein graphisches Warnobjekt, beispielsweise ein Ausrufezeichen, umfassen.

Weiterhin kann, wenn die Ist-Fahrspur nicht der Soll-Fahrspur entspricht, eine Spurwechselempfehlung ausgegeben werden. Hierdurch wird dem Fahrer durch die Anzeige deutlich gemacht, dass er die Spur wechseln soll.

Insbesondere wird ein zusätzlicher Hinweis ausgegeben, der anzeigt, ob sich das Fahrzeug auf der Soll-Fahrspur befindet. Dieser Hinweis wird beispielsweise in Textform in dem ersten Anzeigebereich angezeigt. Befindet sich das Fahrzeug nicht auf der Soll-Fahrspur, wird beispielsweise "Fahrzeug auf der falschen Spur" ausgegeben. Befindet sich das Fahrzeug auf der richtigen Spur wird beispielsweise "Fahrzeug auf der richtigen Spur" ausgegeben.

Die Erfindung betrifft ferner eine Vorrichtung zum Anzeigen von Spurinformationen in einem Fahrzeug. Die Vorrichtung umfasst eine Positionserfassungsvorrichtung, mittels welcher die momentane Position des Fahrzeugs auf einer Route erfassbar ist. Weiterhin umfasst die Vorrichtung eine Ermittlungsvorrichtung, mittels welcher eine Anzahl vorhandener Fahrspuren bei der momentanen Position in Fahrtrichtung des Fahrzeugs auf der Route ermittelbar ist, und mittels welcher der in Fahrtrichtung des Fahrzeugs vor dem Fahrzeug liegende Spurverlauf der vorhandenen Fahrspuren ermittelbar ist, wobei aus dem Spurverlauf eine erste Fahrspur ermittelbar ist, welche eine Soll-Fahrspur für das Fahrzeug ist. Weiterhin ist mittels der Ermittlungsvorrichtung eine Änderungsposition ermittelbar, ab welcher eine zweite und nicht mehr die erste Fahrspur die Soll-Fahrspur für das Fahrzeug ist.

Zudem umfasst die Vorrichtung einen ersten Anzeigebereich, einen zweiten Anzeigebereich und eine Steuervorrichtung. Mittels der Steuervorrichtung ist der erste Anzeigebereich derart ansteuerbar, dass in dem ersten Anzeigebereich eine erste Anzeige erzeugbar ist, welche ein schematisches Abbild der vorhandenen Fahrspuren bei der momentanen Position des Fahrzeugs darstellt, welches schematische Fahrspuren umfasst, wobei die Anzahl der schematischen Fahrspuren der Anzahl der vorhandenen Fahrspuren entspricht, so dass jeweils eine schematische Fahrspur einer vorhandenen Fahrspur zuordenbar ist. Zudem ist mittels der Steuervorrichtung bei zumindest einer ersten schematischen Fahrspur ein graphisches Objekt erzeugbar, welches anzeigt, ob es sich bei der der ersten schematischen Fahrspur zugeordneten Fahrspur um die Soll-Fahrspur handelt. Weiterhin ist der zweite Anzeigebereich derart ansteuerbar, dass in dem zweiten Anzeigebereich eine zweite Anzeige erzeugbar ist, welche ein schematisches Abbild der vorhandenen Fahrspuren bei der Änderungsposition auf der Route darstellt. Die Vorrichtung ist insbesondere dazu ausgestaltet, das erfindungsgemäße Verfahren auszuführen, und weist daher alle Vorteile des Verfahrens auf.

Die Vorrichtung umfasst zudem eine Anzeigefläche, auf welcher der erste und der zweite Anzeigebereich angeordnet sind. Die Anzeigefläche der erfindungsgemäßen Vorrichtung ist dabei insbesondere in einem Kombinationsinstrument des Fahrzeugs angeordnet. Hierdurch kann eine kompakte Anzeige für den Fahrer bereitgestellt werden.

Der erste Anzeigebereich kann dabei auf einer Anzeigefläche insbesondere direkt unterhalb des zweiten Anzeigebereichs angeordnet sein, so dass die erste Anzeige unterhalb der zweiten Anzeige anzeigbar ist. Die Anzeige ist also insbesondere zweizeilig ausgestaltet. Diese Ausgestaltung bietet dem Fahrer vorteilhafterweise eine kompakte Anzeige, so dass der Fahrer nicht innerhalb des Fahrzeugs nach den unterschiedlichen Anzeigen suchen muss.

Weiterhin kann die Vorrichtung eine Erfassungsvorrichtung umfassen, mittels welcher eine Ist-Fahrspur des Fahrzeugs erfassbar ist, auf welcher sich das Fahrzeug befindet. Die Erfassungsvorrichtung kann dabei insbesondere als Kamera ausgestaltet sein. Das von der Kamera aufgenommene Bild wird beispielsweise mittels Algorithmen ausgewertet, welche Trennlinien zwischen den verschiedenen Fahrspuren erkennen können. Dadurch kann dann erkannt werden, auf welcher der vorhandenen Fahrspuren sich das Fahrzeug befindet.

Die Erfindung betrifft ferner ein Fahrzeug mit einer solchen Vorrichtung.

Die Erfindung wird nun anhand von Ausführungsbeispielen mit Bezug zu den Zeichnungen erläutert.
- Figur 1: zeigt ein Fahrzeug mit einer erfindungsgemäßen Vorrichtung,
- Figur 2: zeigt ein Flussdiagramm für ein erstes Ausführungsbeispiel des erfindungsgemäßen Verfahrens,
- Figur 3: zeigt eine Anzeige, wie sie von dem ersten Ausführungsbeispiel des erfindungsgemäßen Verfahrens erzeugt wird,
- Figur 4: zeigt ein Flussdiagramm für ein zweites Ausführungsbeispiel des erfindungsgemäßen Verfahrens, und
- Figuren 5a und 5b: zeigen Anzeigen, wie sie von dem zweiten Ausführungsbeispiel des erfindungsgemäßen Verfahrens erzeugt werden.

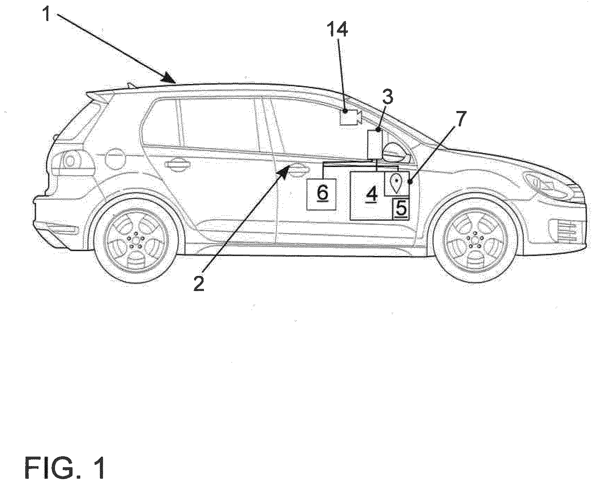

Mit Bezug zu der Figur 1 wird ein Fahrzeug 1 mit einer erfindungsgemäßen Vorrichtung 2 erläutert.

Die erfindungsgemäße Vorrichtung 2 umfasst eine Anzeigefläche 3, die beispielsweise im Kombinationsinstrument des Fahrzeugs 1 angeordnet ist. Dadurch ist es dem Fahrer möglich, durch ein kurzes Absenken seines Blickes auf die Anzeigefläche 3 zu schauen. Die Aufmerksamkeit des Fahrers wird dadurch nur sehr kurz auf die Anzeigefläche gelenkt.

Die Vorrichtung 2 umfasst weiterhin eine Steuervorrichtung 4 mit einer Rechenvorrichtung 5 und einer Positionserfassungsvorrichtung 7. Die Positionserfassungsvorrichtung 7 ist dabei insbesondere als GPS-Empfänger ausgestaltet.

Weiterhin umfasst die Vorrichtung 2 eine Ermittlungsvorrichtung 6. Mittels der Ermittlungsvorrichtung 6 ist die Anzahl der vorhandenen Fahrspuren bei der momentanen Position des Fahrzeugs 1 ermittelbar. Weiterhin ist mittels der Ermittlungsvorrichtung 6 der Spurverlauf der vorhandenen Fahrspuren in Fahrtrichtung F vor dem Fahrzeug 1 ermittelbar. Dies bedeutet, dass der Spurverlauf jeder vorhandenen Fahrspur über den Verlauf der gesamten Route ermittelbar ist und der Vorrichtung 2 bereitgestellt werden kann.

Die Steuervorrichtung 4 kann gemeinsam mit der Anzeigefläche 3, der Positionserfassungsvorrichtung 7 und der Ermittlungsvorrichtung 6 als Navigationssystem für das Fahrzeug 1 dienen. Dabei sind in der Rechenvorrichtung 5 der Steuervorrichtung 4 hochgenaue Karten abgespeichert, welche über Spurinformationen bei jeder Position im Straßennetz eines Landes verfügen. Unter Spurinformationen wird dabei insbesondere die Spuranzahl und der Spurverlauf von Fahrspuren verstanden. Dadurch kann insbesondere ermittelt werden, welche Fahrspuren, beispielsweise einer Autobahn in einer Ausfahrt münden, auf eine andere Autobahn führen, in eine Bus- oder Taxispur übergehen, wegfallen oder hinzukommen.

Durch solche hochgenauen Karten ist es dann möglich, für jeden Ort einer Route eine aktuelle Fahrspurenanzeige für das Fahrzeug 1 bereitzustellen.

Weiterhin umfasst die Vorrichtung 2 eine Erfassungsvorrichtung 14, die als Kamera ausgestaltet ist. Mittels der Kamera 14 kann eine Ist-Fahrspur des Fahrzeugs 1 erfasst werden. Dies bedeutet, dass erfasst werden kann, auf welcher der vorhandenen Fahrspuren sich das Fahrzeug 1 momentan befindet.

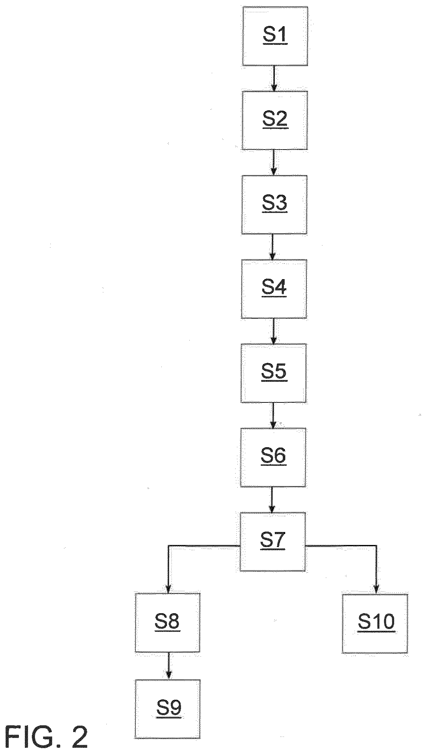

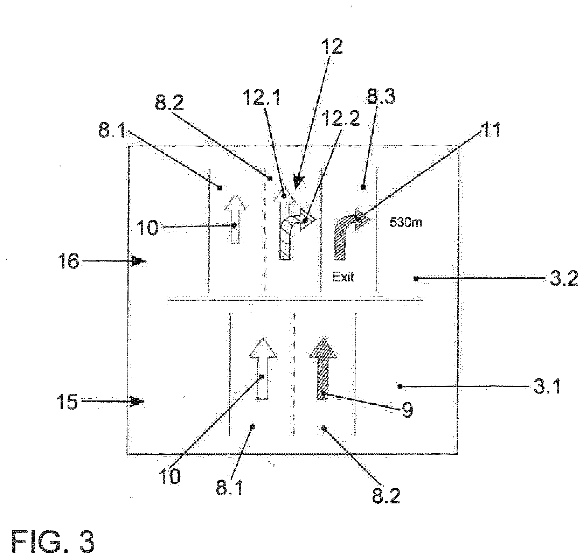

Mit Bezug zu den Figuren 2 und 3 wird ein erstes Ausführungsbeispiel des erfindungsgemäßen Verfahrens sowie eine Anzeige, wie sie von dem ersten Ausführungsbeispiel des erfindungsgemäßen Verfahrens auf der Anzeigefläche 3 erzeugt wird, erläutert. Ausgangssituation des ersten Ausführungsbeispiels des erfindungsgemäßen Verfahrens ist dabei, dass sich das Fahrzeug 1 auf einer zuvor bestimmten Route von einem Startpunkt zu einem Endpunkt befindet.

Im ersten Schritt S1 des Verfahrens wird über den GPS-Empfänger 7 die momentane Position des Fahrzeugs 1 auf der Route erfasst. Im erläuterten Ausführungsbeispiel wird erfasst, dass sich das Fahrzeug 1 auf einer Autobahn befindet.

Im Schritt S2 wird die Anzahl der Fahrspuren, die sich bei der momentanen Position des Fahrzeugs 1 auf der Route befinden, erfasst. Im vorliegenden Beispiel wird ermittelt, dass sich bei der momentanen Position des Fahrzeugs 1 auf der Route zwei Fahrspuren in Fahrtrichtung F des Fahrzeugs 1 befinden.

Im Schritt S3 wird der in Fahrtrichtung F des Fahrzeugs 1 vor dem Fahrzeug 1 liegende Spurverlauf der Fahrspuren ermittelt. Dies wird über die hochgenauen Karten, welche in der Rechenvorrichtung 5 abgespeichert sind, ermittelt.

Aus dem Spurverlauf wird dann im Schritt S4 eine Soll-Fahrspur für das Fahrzeug 1 ermittelt. Die Soll-Fahrspur stellt dabei diejenige Fahrspur dar, auf welcher sich das Fahrzeug 1 befinden sollte, um auf der Route zu bleiben. Dies bedeutet insbesondere, dass kein Spurwechsel notwendig ist, um der Route zu folgen. Im vorliegenden Beispiel wird von einer linken und einer rechten Fahrspur die rechte Fahrspur als Soll-Fahrspur ermittelt.

Weiterhin wird im Schritt S5 eine erste Änderungsposition auf der Route ermittelt. Ab der ersten Änderungsposition ändert sich die Soll-Fahrspur. Dies bedeutet, dass eine zweite Fahrspur ermittelt wird, die ab der ersten Änderungsposition die Soll-Fahrspur darstellt, während die erste Fahrspur nicht mehr die Soll-Fahrspur ist. Dies ist beispielsweise der Fall, wenn die erste Fahrspur wegfällt. Zudem kann eine weitere Fahrspur hinzukommen, die eine Ausfahrt bereitstellt, die der Fahrer nehmen soll, um auf der Route zu bleiben. Die erste Fahrspur ist dann zwar weiterhin vorhanden, ist aber nicht mehr Soll-Fahrspur. Für den Fahrer bedeutet dies, dass er bei der ersten Änderungsposition einen Spurwechsel durchführen muss, um auf der Soll-Fahrspur zu bleiben. Insbesondere wird zusätzlich eine Distanz zu der ersten Änderungsposition ermittelt. Im vorliegenden Beispiel wird ermittelt, dass sich die Fahrbahn um eine dritte Fahrspur zu den bereits vorhandenen Fahrspuren erweitert. Die dritte Fahrspur ist dann die rechte Fahrspur, die vorherige rechte Fahrspur wird zur mittleren Fahrspur und die linke Fahrspur bleibt die linke Fahrspur. Weiterhin wird ermittelt, dass die hinzugekommene dritte Fahrspur zur Soll-Fahrspur wird. Um auf der Route zu verbleiben, muss der Fahrer daher einen Spurwechsel einleiten.

Im Schritt S6 wird die in Figur 3 gezeigte Anzeige auf der Anzeigefläche 3 erzeugt. Die Anzeige ist dabei in einen ersten Anzeigebereich 3.1 und einen zweiten Anzeigebereich 3.2 unterteilt.

Im ersten Anzeigebereich 3.1 wird eine erste Anzeige 15 erzeugt, welche ein schematisches Abbild der vorliegenden Fahrspurensituation anzeigt. Im vorliegenden Beispiel werden zwei schematische Fahrspuren 8.1 und 8.2 angezeigt, die von einer Mittellinie voneinander getrennt sind. Die rechte Fahrspur wurde dabei im Schritt S4 als Soll-Fahrspur ermittelt. Auf der rechten schematischen Fahrspur 8.2 wird daher ein graphisches Objekt 9 erzeugt. Das graphische Objekt 9 stellt einen Pfeil dar, der geradeaus zeigt. Die Richtung des Pfeils zeigt dem Fahrer an, dass die Spur für eine gewisse Distanz, beispielsweise für die nächsten 500 m unverändert bleibt. Weiterhin ist der Pfeil beispielsweise dunkelblau eingefärbt. Die Färbung zeigt dabei dem Fahrer an, dass es sich bei der Fahrspur 8.2 um die Soll-Fahrspur handelt. Weiterhin wird auf der schematischen Fahrspur 8.1 ein zweites graphisches Objekt 10 erzeugt, welches ebenfalls einen geradeaus zeigenden Pfeil darstellt. Dieser zweite Pfeil ist beispielsweise grau eingefärbt. Diese Einfärbung zeigt dem Fahrer an, dass es sich bei der Fahrspur 8.1 nicht um die Soll-Fahrspur handelt.

Im zweiten Anzeigebereich 3.2 wird eine zweite Anzeige 16 erzeugt, welche ein schematisches Abbild der bei der ersten Änderungsposition vorliegenden Fahrspurensituation anzeigt. Die zweite Anzeige 16 ist gegenüber der ersten Anzeige 3.1 um eine dritte schematische Fahrspur 8.3 rechts neben der schematischen Fahrspur 8.2 erweitert. Weiterhin wird auf der dritten schematischen Fahrspur 8.3 ein graphisches Objekt 11 erzeugt. Dieses graphische Objekt 11 stellt einen nach rechts zeigenden Pfeil dar. Dies bedeutet, dass das Folgen dieser Fahrspur dazu führt, dass der Fahrer die Autobahn rechts verlässt. Insbesondere handelt es sich bei der Fahrspur um eine Ausfahrt von der Autobahn. Dies wird beispielsweise durch den Hinweis "Exit", der unter dem graphischen Objekt 11 angezeigt wird, verdeutlicht. Weiterhin kann neben der schematischen Fahrspur 8.3 die Distanz angezeigt werden, die nach Erreichen der ersten Änderungsposition noch für den Spurwechsel zur Verfügung steht. Im vorliegenden Beispiel sind dies 530 m. Weiterhin ist auch das graphische Objekt 11 dunkelblau eingefärbt, um dem Fahrer zu verdeutlichen, dass es sich bei der dritten Fahrspur um die Soll-Fahrspur handelt. Auf der schematischen Fahrspur 8.2 wird das graphische Objekt 12 angezeigt. Das graphische Objekt 12 setzt sich zusammen aus einem Pfeil 12.1, der geradeaus zeigt, und einem Pfeil 12.2, der nach rechts zeigt. Der nach rechts zeigende Pfeil 12.2 ist dabei beispielsweise hellblau eingefärbt und deutet an, dass sich das Fahrzeug 1 zwar nicht auf der Soll-Fahrspur, jedoch auf einer geeigneten Fahrspur befindet. Geeignet bedeutet in diesem Fall, dass nur ein Spurwechsel notwendig ist, um auf die Soll-Fahrspur zu gelangen. Weiterhin wird auf der schematisch dargestellten Fahrspur 8.1 das graphische Objekt 10, welches auch auf der schematischen Fahrspur 8.1 im ersten Anzeigebereich 3.1 erzeugt wird, angezeigt. Die hellgraue Färbung zeigt dabei an, dass es sich bei dieser Fahrspur um eine ungeeignete Fahrspur handelt. Befindet sich das Fahrzeug 1 auf der der schematischen Fahrspur 8.1 zugehörigen Fahrspur, sind mehr als ein Spurwechsel notwendig, um auf die Soll-Fahrspur zu gelangen.

In Schritt S7 wird ermittelt, ob das Fahrzeug 1 die erste Änderungsposition auf der Route erreicht hat.

Wenn ermittelt wird, dass das Fahrzeug 1 die erste Änderungsposition erreicht hat, wird in Schritt S8 des Verfahrens eine zweite Änderungsposition auf der Route ermittelt.

Es wird in Schritt S9 ein Anzeigewechsel herbeigeführt. Dabei wird die zweite Anzeige 16 aus dem zweiten Anzeigebereich 3.2 in den ersten Anzeigebereich 3.1 überführt. In dem zweiten Anzeigebereich 3.2 wird dann eine dritte Anzeige erzeugt, welche ein schematisches Abbild der Fahrspursituation bei der zweiten Änderungsposition auf der Route darstellt. Der Anzeigewechsel kann dabei beispielsweise mittels einer Animation erfolgen. Die Animation wird dabei so ausgeführt, dass die zweite Anzeige 16 aus dem zweiten Anzeigebereich 3.2 in den ersten Anzeigebereich 3.1 herunterklappt und dadurch die erste Anzeige 15 nach und nach von der zweiten Anzeige 16 überdeckt wird. Gleichzeitig erscheint im zweiten Anzeigebereich 3.2 nach und nach die dritte Anzeige, die sich auf die Fahrspurensituation bei der zweiten Änderungsposition bezieht.

Wenn ermittelt wird, dass das Fahrzeug 1 die erste Änderungsposition noch nicht erreicht hat, wird in Schritt S10 des Verfahrens die Anzeige, die in Schritt S6 erzeugt worden ist, auf der Anzeigefläche 3 beibehalten.

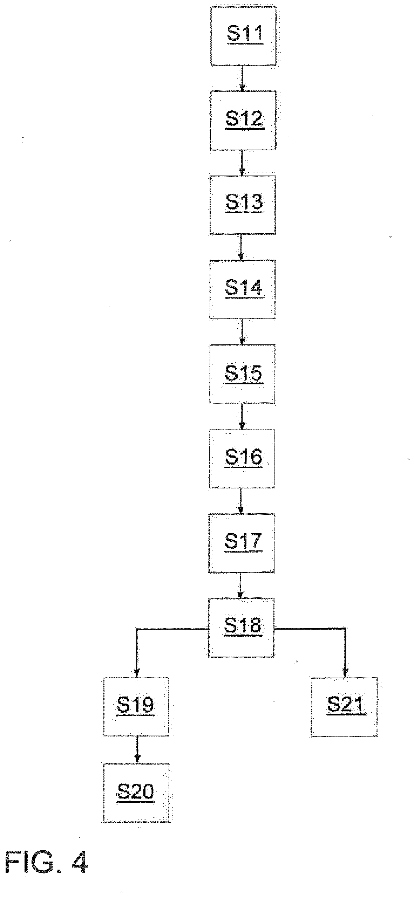

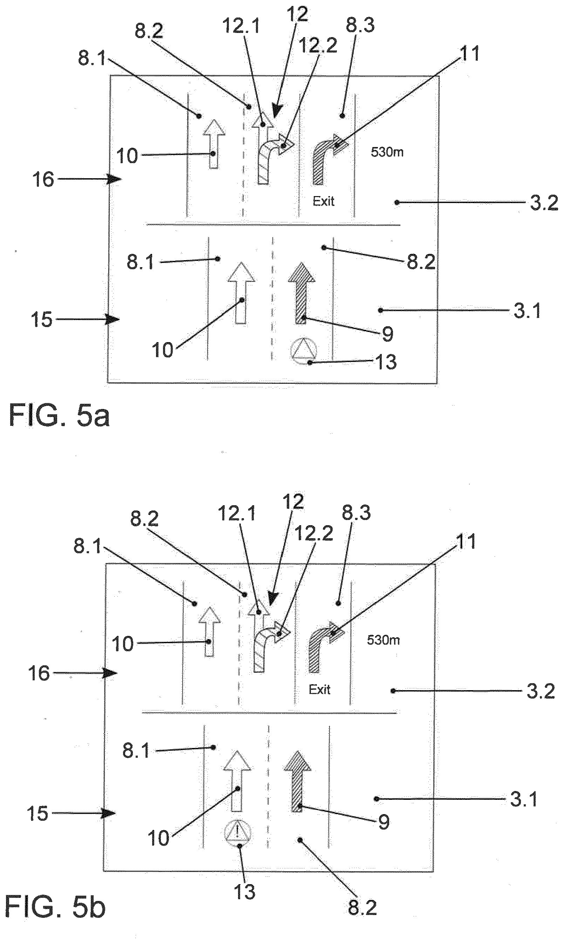

Mit Bezug zu den Figuren 4 und 5a und 5b wird ein zweites Ausführungsbeispiel des erfindungsgemäßen Verfahrens und von dem zweiten Ausführungsbeispiel des Verfahrens erzeugten Anzeigen erläutert.

Ausgangssituation des zweiten Ausführungsbeispiels des erfindungsgemäßen Verfahrens ist dabei wiederum, dass sich das Fahrzeug 1 auf einer zuvor bestimmten Route von einem Startpunkt zu einem Endpunkt befindet. Im erläuterten Ausführungsbeispiel befindet sich das Fahrzeug 1 auf einer Autobahn.

Die Schritte S11 bis S14 entsprechen dabei den Schritten S1 bis S4 des ersten Ausführungsbeispiels des Verfahrens.

In Schritt S15 wird mittels der Kamera 14 die Ist-Fahrspur, auf welcher sich das Fahrzeug 1 tatsächlich befindet, erfasst. Das von der Kamera 14 erfasste Bild der Fahrspursituation wird hierzu an die Steuervorrichtung 4 übermittelt. In der Rechenvorrichtung 5 sind Algorithmen abgespeichert, mittels welcher das übermittelte Bild ausgewertet werden kann. Die Algorithmen können insbesondere die Grenzlinien zwischen den unterschiedlichen Fahrspuren erkennen. An den Positionen der Grenzlinien relativ zu der Kamera kann dann abgeleitet werden, auf welcher der vorhandenen Fahrspuren sich das Fahrzeug 1 befindet.

Der Schritt S16 entspricht dem Schritt S5 des ersten Ausführungsbeispiels des Verfahrens.

Im Schritt S17 wird entweder die in Figur 5a oder die in Figur 5b gezeigte Anzeige auf der Anzeigefläche 3 erzeugt.

Die Anzeigen der Figuren 5a und 5b entsprechen dabei größtenteils der in Figur 3 gezeigten Anzeige.

Zusätzlich zu den graphischen Objekten 9 und 10 wird in dem ersten Anzeigebereich 3.1 ein graphisches Positionsanzeigeobjekt 13 angezeigt. Die Position des graphischen Positionsanzeigeobjekts 13 ist dabei abhängig davon, auf welcher Fahrspur sich das Fahrzeug 1 befindet.

Entspricht die Ist-Fahrspur, auf welcher sich das Fahrzeug 1 tatsächlich befindet, der Soll-Fahrspur, wird das graphische Positionsanzeigeobjekt 13 bei der rechten schematischen Fahrspur 8.2 angezeigt. Zudem nimmt das graphische Positionsanzeigeobjekt 13, wenn es sich bei der schematischen Fahrspur 8.2 befindet, ein erstes Erscheinungsbild an, welches dem Fahrer anzeigt, dass die Ist-Fahrspur, auf welcher sich das Fahrzeug 1 tatsächlich befindet, der Soll-Fahrspur entspricht. Beispielsweise kann hierzu das graphische Positionsanzeigeobjekt 13 ganz oder teilweise grün eingefärbt werden. Zusätzlich kann ein Hinweis in Textform angezeigt werden, der den Fahrer darauf hinweist, dass er sich auf der richtigen Fahrspur befindet.

Entspricht die Ist-Fahrspur, auf welcher sich das Fahrzeug 1 tatsächlich befindet, nicht der Soll-Fahrspur, wird das graphische Objekt 13 bei der linken schematischen Fahrspur 8.2 angezeigt. Zudem nimmt das graphische Objekt 13, wenn es sich bei der schematischen Fahrspur 8.2 befindet, ein zweites Erscheinungsbild an, welches dem Fahrer anzeigt, dass die Ist-Fahrspur, auf welcher sich das Fahrzeug 1 tatsächlich befindet, nicht der Soll-Fahrspur entspricht. Das graphische Objekt 13 weist hierzu ein zusätzliches Warnzeichen, beispielsweise ein Ausrufezeichen, auf. Alternativ oder zusätzlich kann das graphische Objekt 13 ganz oder teilweise rot eingefärbt sein. Zusätzlich kann ein Hinweis in Textform angezeigt werden, der den Fahrer darauf hinweist, dass er sich auf der falschen Fahrspur befindet.

Die weiteren Verfahrensschritte S18 bis S21 entsprechen den Verfahrensschritten S7 bis S10 des ersten Ausführungsbeispiels des Verfahrens.

Bei beiden Ausführungsbeispielen können zusätzlich weitere Spurinformationen angezeigt werden. Beispielsweise kann der ermittelte Spurverlauf nicht nur zur Ermittlung der Soll-Fahrspur verwendet werden. Der Spurverlauf kann für jede vorhandene Fahrspur einzeln ausgegeben werden.

Zudem können zum Zwecke der Navigation weitere Navigationsanweisungen in dem zweiten Anzeigebereich 3.2 angezeigt werden. Die im zweiten Anzeigebereich 3.2 angezeigte Anzeige bezieht sich schließlich auf zukünftige Spurveränderungen, welche einen eventuellen Spurwechsel notwendig machen.

### Bezugszeichenliste

- 1: Fahrzeug
- 2: Vorrichtung
- 3: Anzeigefläche
- 3.1; 3.2: erster Anzeigebereich; zweiter Anzeigebereich
- 4: Steuervorrichtung
- 5: Rechenvorrichtung
- 6: Ermittlungsvorrichtung
- 7: Positionsbestimmungsvorrichtung
- 8.1 - 8.3: schematische Fahrspuren
- 9 - 12: graphische Objekte
- 12.1, 12.2: Pfeile
- 13: weiteres graphisches Objekt
- 14: Erfassungsvorrichtung; Kamera
- 15: erste Anzeige
- 16: zweite Anzeige
- S1 - S10: Verfahrensschritte
- S11 - S21: Verfahrensschritte
- F: Fahrtrichtung

## Patentansprüche

1. Verfahren zum Anzeigen von Spurinformation in einem Fahrzeug (1), bei dem
die momentane Position des Fahrzeugs (1) auf einer Route erfasst wird,
eine Anzahl vorhandener Fahrspuren bei der momentanen Position in Fahrtrichtung (F) des Fahrzeugs (1) auf der Route ermittelt wird,
der in Fahrtrichtung (F) des Fahrzeugs (1) vor dem Fahrzeug (1) liegende Spurverlauf der vorhandenen Fahrspuren mittels hochgenauer Karten ermittelt wird, wobei aus dem Spurverlauf eine erste Fahrspur ermittelt wird, welche eine Soll-Fahrspur für das Fahrzeug (1) ist,
in einem ersten Anzeigebereich (3.1) eine erste Anzeige (15) erzeugt wird, welche ein schematisches Abbild der vorhandenen Fahrspuren bei der momentanen Position des Fahrzeugs (1) darstellt, welches schematische Fahrspuren (8.1, 8.2) umfasst, wobei die Anzahl der schematischen Fahrspuren (8.1, 8.2) der Anzahl der vorhandenen Fahrspuren entspricht, so dass jeweils eine schematische Fahrspur (8.1, 8.2) einer vorhandenen Fahrspur zugeordnet ist,
bei zumindest einer ersten schematischen Fahrspur (8.1, 8.2) ein graphisches Objekt (9, 10) erzeugt wird, welches anzeigt, ob es sich bei der der ersten schematischen Fahrspur (8.1, 8.2) zugeordneten Fahrspur um die Soll-Fahrspur handelt,
eine erste Änderungsposition auf der Route ermittelt wird, ab welcher eine zweite und nicht mehr die erste Fahrspur die Soll-Fahrspur für das Fahrzeug (1) ist, und
in einem zweiten Anzeigebereich (3.2) eine zweite Anzeige (16) erzeugt wird, welche ein schematisches Abbild der vorhandenen Fahrspuren bei der ersten Änderungsposition auf der Route darstellt, wobei
eine zweite Änderungsposition auf der Route ermittelt wird und,
wenn die momentane Position des Fahrzeugs (1) mit der ersten Änderungsposition übereinstimmt, ein Anzeigewechsel herbeigeführt wird, bei dem die zweite Anzeige (16) in dem ersten Anzeigebereich (3.1) angezeigt wird und bei dem in dem zweiten Anzeigebereich (3.2) eine dritte Anzeige erzeugt wird, welche ein schematisches Abbild der vorhandenen Fahrspuren bei der zweiten Änderungsposition auf der Route darstellt.

2. Verfahren nach Anspruch 1,
**dadurch gekennzeichnet, dass**
die erste Fahrspur der ersten schematischen Fahrspur (8.2) zugeordnet ist, so dass das graphische Objekt (9) anzeigt, dass es sich bei der ersten Fahrspur um die Soll-Fahrspur handelt.

3. Verfahren nach Anspruch 1 oder 2,
**dadurch gekennzeichnet, dass**
bei den schematischen Fahrspuren (8.1, 8.2), die den vorhandenen Fahrspuren zugeordnet sind, die nicht als Soll-Fahrspur für das Fahrzeug (1) ermittelt werden, jeweils ein weiteres graphisches Objekt (10) erzeugt wird, welches anzeigt, dass es sich nicht um die Soll-Fahrspur handelt.

4. Verfahren nach einem der vorhergehenden Ansprüche,
**dadurch gekennzeichnet, dass**
der Anzeigewechsel mittels einer Animation herbeigeführt wird.

5. Verfahren nach Anspruch 4,
**dadurch gekennzeichnet, dass**
bei der Animation die zweite Anzeige (16) in den ersten Anzeigebereich (3.1) überführt wird, wobei die erste Anzeige (15) in dem ersten Anzeigebereich (3.1) durch die zweite Anzeige (16) ersetzt wird und die dritte Anzeige in dem zweiten Anzeigebereich (3.2) angezeigt wird.

6. Verfahren nach einem der vorhergehenden Ansprüche,
**dadurch gekennzeichnet, dass**
eine Ist-Fahrspur des Fahrzeugs erfasst wird, auf welcher sich das Fahrzeug befindet, und
in der ersten Anzeige (15) bei der schematischen Fahrspur (8.1, 8.2), die der Ist-Fahrspur des Fahrzeugs (1) zugeordnet ist, ein graphisches Positionsanzeigeobjekt (13) erzeugt wird, welches das Fahrzeug (1) repräsentiert.

7. Verfahren nach Anspruch 6,
**dadurch gekennzeichnet, dass**
ermittelt wird, ob die Ist-Fahrspur des Fahrzeugs (1) der Soll-Fahrspur entspricht, wenn ermittelt worden ist, dass die Ist-Fahrspur der Soll-Fahrspur entspricht, das graphische Positionsanzeigeobjekt (13) ein erstes Erscheinungsbild annimmt, und,
wenn ermittelt worden ist, dass die Ist-Fahrspur nicht der Soll-Fahrspur entspricht, das graphische Positionsanzeigeobjekt (13) ein zweites Erscheinungsbild annimmt.

8. Verfahren nach Anspruch 7,
**dadurch gekennzeichnet, dass**,
wenn die Ist-Fahrspur nicht der Soll-Fahrspur entspricht, eine Spurwechselempfehlung ausgegeben wird.

9. Verfahren nach einem der vorhergehenden Ansprüche,
**dadurch gekennzeichnet, dass**,
ein zusätzlicher Hinweis ausgegeben wird, der anzeigt, ob sich das Fahrzeug (1) auf der Soll-Fahrspur befindet.

10. Vorrichtung (2) zum Anzeigen von Spurinformationen in einem Fahrzeug (1), umfassend
eine Positionserfassungsvorrichtung (7), mittels welcher die momentane Position des Fahrzeugs (1) auf einer Route erfassbar ist,
eine Ermittlungsvorrichtung (6), mittels welcher eine Anzahl vorhandener Fahrspuren bei der momentanen Position in Fahrtrichtung (F) des Fahrzeugs (1) auf der Route ermittelbar ist und mittels welcher der in Fahrtrichtung (F) des Fahrzeugs (1) vor dem Fahrzeug (1) liegende Spurverlauf der vorhandenen Fahrspuren ermittelbar ist, wobei aus dem Spurverlauf eine erste Fahrspur ermittelbar ist, welche eine Soll-Fahrspur für das Fahrzeug (1) ist, und mittels welcher eine Änderungsposition ermittelbar ist, ab welcher eine zweite und nicht mehr die erste Fahrspur die Soll-Fahrspur für das Fahrzeug (1) ist,
einen ersten Anzeigebereich (3.1),
einen zweiten Anzeigebereich (3.2), und
eine Steuervorrichtung (4) mit einer Rechenvorrichtung (5), in welcher hochgenaue Karten abgespeichert sind, wobei mittels der Steuervorrichtung (4) der erste Anzeigebereich (3.1) derart ansteuerbar ist, dass in dem ersten Anzeigebereich (3.1) eine erste Anzeige (15) erzeugbar ist, welche ein schematisches Abbild der vorhandenen Fahrspuren bei der momentanen Position des Fahrzeugs (1) darstellt, welches schematische Fahrspuren (8.1, 8.2) umfasst, wobei die Anzahl der schematischen Fahrspuren (8.1, 8.2) der Anzahl der vorhandenen Fahrspuren entspricht, so dass jeweils eine schematische Fahrspur (8.1, 8.2) einer vorhandenen Fahrspur zuordenbar ist,
bei zumindest einer ersten schematischen Fahrspur (8.2) ein graphisches Objekt (9) erzeugbar ist, welches anzeigt, ob es sich bei der der ersten schematischen Fahrspur (8.2) zugeordneten Fahrspur um die Soll-Fahrspur handelt, und
der zweite Anzeigebereich (3.2) derart ansteuerbar ist, dass in dem zweiten Anzeigebereich (3.2) eine zweite Anzeige (16) erzeugbar ist, welche ein schematisches Abbild der vorhandenen Fahrspuren bei der Änderungsposition auf der Route darstellt, wobei
eine zweite Änderungsposition auf der Route ermittelbar ist und
der erste (3.1) und zweite Anzeigebereich (3.2) ferner derart ansteuerbar sind, dass, wenn die momentane Position des Fahrzeugs (1) mit der ersten Änderungsposition übereinstimmt, ein Anzeigewechsel herbeigeführt wird, bei dem die zweite Anzeige (16) in dem ersten Anzeigebereich (3.1) angezeigt wird und bei dem in dem zweiten Anzeigebereich (3.2) eine dritte Anzeige erzeugt wird, welche ein schematisches Abbild der vorhandenen Fahrspuren bei der zweiten Änderungsposition auf der Route darstellt.

11. Vorrichtung (2) nach Anspruch 10,
**dadurch gekennzeichnet, dass**
die Vorrichtung eine Anzeigefläche (3) umfasst, auf welcher der erste (3.1) und der zweite Anzeigebereich (3.2) angeordnet sind.

12. Vorrichtung (2) nach einem der Ansprüche 10 oder 11,
**dadurch gekennzeichnet, dass**
der erste Anzeigebereich (3.1) direkt unterhalb des zweiten Anzeigebereichs (3.2) angeordnet ist, so dass die erste Anzeige (15) unterhalb der zweiten Anzeige (16) anzeigbar ist.

13. Vorrichtung (2) nach einem der Ansprüche 10 bis 12,
**dadurch gekennzeichnet, dass**
mittels einer Erfassungsvorrichtung (14) eine Ist-Fahrspur des Fahrzeugs (1) erfassbar ist, auf welcher sich das Fahrzeug (1) befindet.

14. Fahrzeug mit einer Vorrichtung (2) nach einem der Ansprüche 10 bis 13.

## Claims

1. Method for displaying lane information in a vehicle (1), in which
the current position of the vehicle (1) on a route is detected,
a number of lanes that are present at the current position in the direction of travel (F) of the vehicle (1) on the route is determined,
the lane course of the lanes that are present ahead of the vehicle (1) in the direction of travel (F) of the vehicle (1) is determined by means of highly accurate maps, wherein a first lane which is a target lane for the vehicle (1) is determined from the lane course,
a first display (15) is generated in a first display area (3.1), which first display shows a schematic image of the lanes present at the current position of the vehicle (1), which schematic image comprises schematic lanes (8.1, 8.2), wherein the number of schematic lanes (8.1, 8.2) corresponds to the number of lanes that are present, so that in each case a schematic lane (8.1, 8.2) is assigned to a lane that is present,
a graphic object (9, 10) is generated at at least one first schematic lane (8.1, 8.2), which graphic object indicates whether the lane assigned to the first schematic lane (8.1, 8.2) is the target lane,
a first change position on the route is determined from which a second and no longer the first lane will be the target lane for the vehicle (1), and
a second display (16) is generated in a second display area (3.2), which second display shows a schematic image of the lanes present at the first change position on the route, wherein
a second change position on the route is determined, and
if the current position of the vehicle (1) corresponds to the first change position, a display change is effected, in which the second display (16) is displayed in the first display area (3.1) and in which a third display is generated in the second display area (3.2), which third display shows a schematic image of the lanes present at the second change position on the route.

2. Method according to Claim 1,
**characterized in that**
the first lane is assigned to the first schematic lane (8.2) so that the graphic object (9) indicates that the first lane is the target lane.

3. Method according to Claim 1 or 2,
**characterized in that**
at the schematic lanes (8.1, 8.2) assigned to the lanes that are present and that are not determined to be a target lane for the vehicle (1), a further graphic object (10) which indicates that the lane is not the target lane is generated in each case.

4. Method according to any one of the preceding claims,
**characterized in that**
the display change is effected by means of an animation.

5. Method according to Claim 4,
**characterized in that**
during the animation, the second display (16) is transferred into the first display area (3.1), wherein the first display (15) in the first display area (3.1) is replaced by the second display (16) and the third display is displayed in the second display area (3.2).

6. Method according to any one of the preceding claims,
**characterized in that**
an actual lane of the vehicle on which the vehicle is located is detected, and
a graphic position display object (13) which represents the vehicle (1) is generated in the first display (15) at the schematic lane (8.1, 8.2) that is assigned to the actual lane of the vehicle (1).

7. Method according to Claim 6,
**characterized in that**
it is determined whether the actual lane of the vehicle (1) corresponds to the target lane; if it has been determined that the actual lane corresponds to the target lane, the graphic position display object (13) assumes a first appearance, and
if it has been determined that the actual lane does not correspond to the target lane, the graphic position display object (13) assumes a second appearance.

8. Method according to Claim 7,
**characterized in that**
if the actual lane does not correspond to the target lane, a lane change recommendation is output.

9. Method according to any one of the preceding claims,
**characterized in that**
an additional notification is output which indicates whether the vehicle (1) is located on the target lane.

10. Device (2) for displaying lane information in a vehicle (1), comprising
a position detection device (7) by means of which the current position of the vehicle (1) on a route can be detected,
a determination device (6) by means of which a number of lanes present at the current position in the direction of travel (F) of the vehicle (1) on the route can be determined and by means of which the lane course of the lanes that are present ahead of the vehicle (1) in the direction of travel (F) of the vehicle (1) can be determined, wherein a first lane can be determined from the lane course, which first lane is a target lane for the vehicle (1) and by means of which first lane a change position can be determined from which a second and no longer the first lane will be the target lane for the vehicle (1),
a first display area (3.1),
a second display area (3.2), and
a control device (4) having a computing device (5) in which highly accurate maps are stored, wherein the first display area (3.1) can be controlled by means of the control device (4) in such a way that a first display (15) can be generated in the first display area (3.1), which first display shows a schematic image of the lanes present at the current position of the vehicle (1), which schematic image comprises schematic lanes (8.1, 8.2), wherein the number of schematic lanes (8.1, 8.2) corresponds to the number of lanes present, so that one schematic lane (8.1, 8.2) each can be assigned to a lane that is present,
a graphic object (9) can be generated at at least one first schematic lane (8.2), which graphic object indicates whether the lane assigned to the first schematic lane (8.2) is the target lane, and
the second display area (3.2) can be controlled in such a way that a second display (16) can be generated in the second display area (3.2), which second display shows a schematic image of the lanes present at the change position on the route, wherein
a second change position on the route can be determined, and
the first display area (3.1) and the second display area (3.2) can furthermore be controlled in such a way that if the current position of the vehicle (1) corresponds to the first change position, a display change is effected, in which the second display (16) is displayed in the first display area (3.1) and in which a third display is generated in the second display area (3.2), which third display displays a schematic image of the lanes present at the second change position on the route.

11. Device (2) according to Claim 10,
**characterized in that**
the device comprises a display surface (3) on which the first (3.1) and the second display areas (3.2) are arranged.

12. Device (2) according to any one of Claims 10 or 11,
**characterized in that**
the first display area (3.1) is arranged directly below the second display area (3.2) so that the first display (15) can be displayed below the second display (16).

13. Device (2) according to any one of Claims 10 to 12,
**characterized in that**
an actual lane of the vehicle (1) on which the vehicle (1) is located can be detected by means of a detection device (14).

14. Vehicle having a device (2) according to any one of Claims 10 to 13.

## Revendications

1. Procédé pour afficher des informations concernant des voies de circulation dans un véhicule (1) dans lequel
la position momentanée du véhicule (1) est détectée sur un itinéraire,
un certain nombre de voies de circulation disponibles est déterminé pour la position momentanée dans le sens de circulation (F) du véhicule (1) sur l'itinéraire,
le tracé des voies de circulation disponibles devant le véhicule (1) dans le sens de circulation (F) du véhicule (1) est déterminé au moyen de cartes hautement précises, dans lequel ce tracé des voies de circulation est utilisé pour déterminer une première voie de circulation qui est une voie de circulation théorique pour le véhicule (1),
dans une première zone d'affichage (3.1), un premier affichage (15) est généré, qui représente un schéma des voies de circulation disponibles pour la position momentanée du véhicule (1), lequel comprend des voies de circulation schématiques (8.1, 8.2), dans lequel le nombre des voies de circulation schématiques (8.1,8.2) correspond au nombre des voies de circulation disponibles, de sorte que, respectivement, une voie de circulation schématique (8.1, 8.2) soit associée à une voie de circulation disponible,
pour au moins une première voie de circulation schématique (8.1, 8.2), un objet graphique (9, 10) est généré, lequel indique si la voie de circulation associée à la première voie de circulation schématique (8.1, 8.2) est la voie de circulation théorique,
une première position de modification est déterminée sur l'itinéraire, à partir de laquelle une deuxième et non plus la première voie de circulation est la voie de circulation théorique pour le véhicule (1) et
dans une deuxième zone d'affichage (3.2), un deuxième affichage (16) est généré, qui représente un schéma des voies de circulation disponible pour la première position de modification sur l'itinéraire, dans lequel
une deuxième position de modification est déterminée sur l'itinéraire et,
lorsque la position momentanée du véhicule (1) coïncide avec la première position de modification, un changement d'affichage est provoqué, selon lequel le deuxième affichage (16) est affiché dans la première zone d'affichage (3.1) et selon lequel, dans la deuxième zone d'affichage (3.2), un troisième affichage est généré, qui représente un schéma des voies de circulation disponibles pour la deuxième position de modification sur l'itinéraire.

2. Procédé selon la revendication 1,
**caractérisé en ce que**
la première voie de circulation est associée à la première voie de circulation schématique (8.2), de sorte que l'objet graphique (9) indique que la première voie de circulation est la voie de circulation théorique.

3. Procédé selon la revendication 1 ou 2,
**caractérisé en ce que**
pour les voies de circulation schématiques (8.1, 8.2), qui sont associées aux voies de circulation disponibles, qui n'ont pas été déterminées comme voie de circulation théorique pour le véhicule (1), un autre objet graphique (10) est respectivement généré, lequel indique qu'il ne s'agit pas de la voie de circulation théorique.

4. Procédé selon l'une quelconque des revendications précédentes,
**caractérisé en ce que**
le changement d'affichage est provoqué au moyen d'une animation.

5. Procédé selon la revendication 4,
**caractérisé en ce que**
pour l'animation, le deuxième affichage (16) est transféré dans la première zone d'affichage (3.1), dans lequel le premier affichage (15) est remplacé par le deuxième affichage (16) dans la première zone d'affichage (3.1) et le troisième affichage est affiché dans la deuxième zone d'affichage (3.2).

6. Procédé selon l'une quelconque des revendications précédentes,
**caractérisé en ce que**
une voie de circulation réelle du véhicule, sur laquelle le véhicule se trouve, est détectée et
dans le premier affichage (15), pour la voie de circulation schématique (8.1, 8.2), qui est associée à la voie de circulation réelle du véhicule (1), un objet d'affichage de position graphique (13) est généré, lequel représente le véhicule (1).

7. Procédé selon la revendication 6,
**caractérisé en ce que**
il est déterminé si la voie de circulation réelle du véhicule (1) correspond à la voie de circulation théorique, lorsqu'il a été déterminé que la voie de circulation réelle correspond à la voie de circulation théorique, l'objet d'affichage de position graphique (13) adopte une première apparence et,
lorsqu'il a été déterminé que la voie de circulation réelle ne correspond pas à la voie de circulation théorique, l'objet d'affichage de position graphique (13) adopte une deuxième apparence.

8. Procédé selon la revendication 7,
**caractérisé en ce que**
lorsque la voie de circulation réelle ne correspond pas à la voie de circulation théorique, une recommandation de changement de voie de circulation est émise.

9. Procédé selon l'une quelconque des revendications précédentes,
**caractérisé en ce que**
une remarque supplémentaire est émise, qui affiche si le véhicule (1) se trouve sur la voie de circulation théorique.

10. Dispositif (2) pour afficher des informations de voies de circulation dans un véhicule (1) comprenant
un dispositif de détection de position (7) au moyen duquel la position momentanée du véhicule (1) est détectée sur un itinéraire,
un dispositif de détermination (6), au moyen duquel un certain nombre de voies de circulation disponibles peut être déterminé pour la position momentanée dans le sens de circulation (F) du véhicule (1) sur l'itinéraire et au moyen duquel le tracé des voies de circulation disponibles devant le véhicule (1) dans le sens de circulation (F) du véhicule (1) peut être déterminé, dans lequel ce tracé des voies de circulation est utilisé pour déterminer une première voie de circulation, qui est une voie de circulation théorique pour le véhicule (1) et au moyen duquel une position de modification peut être déterminée, à partir de laquelle une deuxième et non plus la première voie de circulation est la voie de circulation théorique pour le véhicule (1),
une première zone d'affichage (3.1),
une deuxième zone d'affichage (3.2) et
un dispositif de commande (4) avec un dispositif de calcul (5), dans lequel des cartes hautement précises sont mémorisées, dans lequel, au moyen du dispositif de commande (4), la première zone d'affichage (3.1) peut être commandée de sorte que, dans la première zone d'affichage (3.1), un premier affichage (15) puisse être généré, qui représente un schéma des voies de circulation disponibles pour la position momentanée du véhicule (1), lequel comprend des voies de circulation schématiques (8.1, 8.2), dans lequel le nombre des voies de circulation schématiques (8.1, 8.2) correspond au nombre des voies de circulation disponibles, de sorte que, respectivement, une voie de circulation schématique (8.1, 8.2) puisse être associée à une voie de circulation disponible,
pour au moins une première voie de circulation schématique (8.2), un objet graphique (9) peut être généré, lequel indique si la voie de circulation associée à la première voie de circulation schématique (8.2) est la voie de circulation théorique et
la deuxième zone d'affichage (3.2) peut être commandée de sorte que, dans la deuxième zone d'affichage (3.2), un deuxième affichage (16) puisse être généré, qui représente un schéma des voies de circulation disponible pour la position de modification sur l'itinéraire, dans lequel
une deuxième position de modification peut être déterminée sur l'itinéraire et
la première (3.1) et la deuxième zone d'affichage (3.2) peuvent en outre être commandées de sorte que, lorsque la position momentanée du véhicule (1) coïncide avec la première position de modification, un changement d'affichage soit provoqué, selon lequel le deuxième affichage (16) est affiché dans la première zone d'affichage (3.1) et selon lequel, dans la deuxième zone d'affichage (3.2), un troisième affichage est généré, qui représente un schéma des voies de circulation disponibles pour la deuxième position de modification sur l'itinéraire.

11. Dispositif (2) selon la revendication 10,
**caractérisé en ce que**
le dispositif comprend une surface d'affichage (3), sur laquelle la première (3.1) et la deuxième zone d'affichage (3.2) sont agencées.

12. Dispositif (2) selon l'une quelconque des revendications 10 ou 11,
**caractérisé en ce que**
la première zone d'affichage (3.1) est agencée directement au-dessous de la deuxième zone d'affichage (3.2), de sorte que le premier affichage (15) puisse être affiché sous le deuxième affichage (16).

13. Dispositif (2) selon l'une quelconque des revendications 10 à 12,
**caractérisé en ce que**
au moyen d'un dispositif de détection (14), une voie de circulation réelle du véhicule (1), sur laquelle le véhicule (1) se trouve, peut être détectée.

14. Véhicule comprenant un dispositif (2) selon l'une quelconque des revendications 10 à 13.
